# EUROPEAN PATENT SPECIFICATION

(11) **EP 2 914 698 B1**
(45) Date of publication and mention of the grant of the patent: **25.11.2026**
(21) Application number: 13820932.5
(22) Date of filing: 30.10.2013
(51) Int. Cl.: C10G 75/00, C10G 9/00, C10G 11/00, G01N 21/49

(54) **A METHOD FOR MONITORING OPERATIVE CONDITIONS OF THERMAL AND/OR CATALYTIC CRACKING PLANTS AND RELATED APPARATUS**
VERFAHREN ZUR ÜBERWACHUNG DER BETRIEBSBEDINGUNGEN VON WÄRMEANLAGEN UND/ODER ANLAGEN FÜR KATALYTISCHES CRACKING UND ENTSPRECHENDE VORRICHTUNG
PROCÉDÉ POUR LE SUIVI DE CONDITIONS DE FONCTIONNEMENT D'INSTALLATIONS DE CRAQUAGE THERMIQUE ET/OU CATALYTIQUE ET APPAREIL S'Y RAPPORTANT

(30) Priority: 30.10.2012 IT RM20120520
(43) Date of publication of application: 09.09.2015
(73) Proprietor: Chimec S.p.A., 00144 Roma (IT)
(72) Inventor: BUCCOLINI, Marco, I-62032 Camerino MC (IT); MANTARRO, Milena, I-00174 Roma RM (IT); BANCONE, Michele, I-00040 Ariccia RM (IT); SIANO, Vincenzo, I-84124 Salerno SA (IT)
(74) Representative: Montemurro, Riccardo
(86) International application number: PCT/IB2013/059788
(87) International publication number: WO 2014/068498

(56) References cited:
- EP-A2- 0 234 857
- EP-A2- 1 227 140
- WO-A1-01/38459
- FR-A1- 2 578 979
- IT-B- 1 211 978
- US-A1- 2007 008 540
- US-A1- 2010 116 715
- US-B1- 6 881 760

## Description

The present invention concerns the field of thermal and/or catalytic conversion processes and plants and relates to an improved procedure based on the measurement of a new parameter called CV/IR for determining the tendency of the bottom residue to foul the plant and for enabling greater yields of light distillates, greater control of the fouling occurring in the plant, and therefore a reduction of the associated energy consumption. In addition, the new procedure described in the patent makes it possible to determine on-line and in real time the tendency for fouling inasmuch as the analyzed sample does not require any handling or dilution.

### Prior art

Thermal conversion plants, such as visbreaking (VSB) plants, and/or catalytic plants (both of the fluid-bed and fixed-bed type, such as FCC, LC Finer, H-Oil plants and others), which can be found in the productive cycle of a refinery, are aimed at the utilization of the residues of the distillation of petroleum, otherwise destined for bitumen or combustible oil (products notoriously of low commercial value), so as to convert these products, in part, into lighter products of greater value. Conversion makes it possible to obtain significant quantities of distilled products, such as gas, benzine, kerosene and diesel oil.

Normally, the conversion process is carried out so as to maximize the yield of distilled products, thus lowering the overall yield of heavy residues.

Adjustment of the operative parameters of the plants described above for the purpose of maximizing the yield of light products and managing the plants with controlled fouling conditions is carried out by means of methods for measuring aggregated asphaltenes and particles of carbon suspended in the charge and in the bottom residue produced. This residue is a strongly opaque, high-density, oily fluid also referred to as tar.

To increase the yield of the plant and therefore to reduce the amount of tar produced so as to be equal to the amount of charge, it is necessary to increase the severity of the operative conditions of the cycle, for example to raise the temperature of the furnace. However, operating the plant at the maximum severity possible has some disadvantages. The first disadvantage is the fouling of the plant. The phenomenon is caused by the formation of solid carbonaceous residues and other solid fouling compounds. Such fouling residues represent the particulate, and undesirable, fraction of the intermediate production products and of the final products, specifically of tar. Such a particulate fraction comprises coke particles (amorphous carbon), known as 'dark particles', that is to say the maximum stage of dehydrogenation of asphaltenes, but also highly dehydrogenated, if not totally dehydrogenated, asphaltene particles. Due to their solid nature, these particles tend to deposit on the inner surfaces of the plant, thus fouling the plant itself and resulting in the need to interrupt the thermal conversion cycle in order to remove said particles.

A second disadvantage caused by the high severity of the operative conditions is constituted by the instability of the tar. In fact, tar is formed of an oily base containing aromatic components, resins and asphaltenes. The asphaltenes, which are normally insoluble in the oily base, are kept in solution/dispersion in a stable manner by the resins. However, if the severity of the operative conditions (for example high temperature of the furnace) increases, the ratio of asphaltenes:resins is altered and the amount of available resins is no longer sufficient to keep the asphaltenes in solution. Over time, this causes a fluctuation of the asphaltenes and a subsequent instability of the residue (tar), thus making it unusable.

Many methods for monitoring the thermal conversion process are known in the prior art.

There is a link between (a) the yield of refined distilled products, (b) the degree of fouling, and (c) the stability of the residue (tar). Increasing the severity of the conditions, for example increasing the temperature of the furnace or the temperature at the discharge from the furnace, will increase the yield of distilled products, but will also increase the level of fouling and will reduce the stability of the tar.

Once operative conditions that represent an optimal compromise between the above-indicated parameters have been defined, the thermal conversion cycle must be regularly monitored on the basis of parameters which make it possible to identify, in the products obtained, any deviation from the predefined characteristics and which consequently make it possible to correct the operative conditions, bringing such characteristics back to the desired levels.

The usual methods for determining the operative conditions and for monitoring the visbreaking process evaluated one of the four following parameters: PV (peptization value), FR (flocculation ratio), MB (xylene equivalent) and HFT (hot filtration test), which determine the stability of the tar and the presence of finely dispersed solids using different methods. See patent IT 1811979 (Chimec).

These methods have countless recognized disadvantages. They are long due to the necessary steps of dilution, reheating (30 min) and successive cooling (30 min) and are not easily executed. The result is heavily influenced by the sensitivity of the equipment used and of the operator. In other words, the methods are subjective, not very reliable, and do not permit quick monitoring of the plant.

Another disadvantage lies in the fact that these methods identify the stability of the tar, but do not have any direct (proportional) reference to the fouling of the plant, which, as seen, is caused primarily by the presence of the tar and the other intermediate products of solid coke particles and asphaltene particles in their maximum stage of dehydrogenation.

A significant advantage over the methods based on one of the four above-indicated parameters has been offered by the introduction of the instantaneous CV parameter by the present applicant (see patents IT 1211978 and EP0529397-B1).

Such a new CV reference parameter for the stability of the tar and for fouling corresponds to the number of dark punctiform particles present in the bottom residue (tar) measured using optical microscopy techniques and having normal dimensions including the range of maximum frequency between 1 and 20 µm. Such particles are formed by coke (amorphous carbon), which represents the maximum stage of dehydrogenation of the asphaltenes. The method, using the degree of fouling as a reference term, makes it possible to control the process temperature, and therefore the yield, up to the maximum value for which a predefined fouling threshold is not exceeded.

The monitoring of the CV parameter requires direct observation under microscope of a tar sample, without any addition of flocculant solvents, and the counting of the coke particles present in the sample. The coefficient CV therefore makes it possible to carry out a monitoring process in real time (analyses carried out within a few minutes) of the visbreaker cycle and also allows the possibility of an immediate adjustment of the operative conditions where the CV indicates excessive fouling. This method is not free from disadvantages however. The instantaneous CV parameter is given from the summation of the areas that can be references to the particles present on a residue and is in fact measured in µm². Such particles are identified by inserting a drop of the heated residue (the residue is in fact solid at ambient temperature) onto a microscope slide, crushing the drop with a cover slide so as to obtain a thin and transparent layer of residue, visualizing the enlarged image by microscope on a camera, and lastly counting the areas of the particles visible in the image using appropriate software. All of these operations however involve the inevitable initial handling of the sample, or the manual formation of the thin layer readable with a microscope functioning in the visible wavelength spectrum. If the drop of residue is not of minimal amount (a few milligrams) and if the layer obtained is not sufficiently thin (some tens of microns), the view with an optical microscope is completely obscured. In fact, the particles become confused with the dark background due to the completely black layer of sample, a layer which cannot be passed by the light source of the microscope, which functions in transparency.

Attempts to overcome this problem are reported in the literature. WO- 2001/38459 *"Method for improving thermal cracking process and product yields therefrom (Baker Hughes Inc.)*
The process described in this application is based on the evaluation of two parameters: one relating to the stability of the residue and one (the counting of the particles) relating to the fouling. The first parameter corresponds to the traditional PV and is determined by successive additions to the tar of a destabilizing solvent of asphaltenes (n-heptane).

An aliquot of the residue is strongly diluted by a first solvent that completely dissolves the asphaltenes (toluene, xylene, etc.). This operation is necessary because the residue is too dark and opaque to the light and therefore, without the initial dilution which makes the solution transparent, it would not be possible to make any determination. A series of additions of a second solvent are then carried out successively (by means of an automatic titrator), said solvent destabilizing the asphaltenes (n-heptane), thus provoking the peptization thereof (precipitation in flakes, which are again dispersed in the residue). When a critical amount of the second solvent has been added, the destabilized asphaltenes precipitate and can be determined by means of an NIR (near infrared) probe. In this case, the parameter obtained, called the ISI (infrared stability index), is not an area of a count of particles, but is expressed as the amount of n-heptane solvent to be added to the sample necessary to highlight a pronounced precipitation of the asphaltenes. Better still, it is expressed as the ratio of the added volume to the initial volume of sample. As already demonstrated, rather complex handling and heavy dilution of the residue are necessary in order to obtain this index.

The second parameter measured is the count of coke particles by means of strong dilution of the sample and counting using a laser probe of the solution obtained. The laser, although a very powerful source, functions in the visible spectrum and therefore, in order to count the particles, requires a solution that is not too opaque and that is at least partly transparent to light radiation. Since the residue is strongly colored black, the sample must be strongly diluted. The ratio between solvent and residue must be from 1,000,000:1 to 5:1, but preferably 100,000:1
A second attempt to overcome the problems inherent to the measurement of the CV parameter is described in EP1092976 - Particle measurement by acoustic speckle (Baker Hughes Inc.)
This patent teaches the possibility of counting particles dispersed in the residue using an ultrasound probe. Although the inventors confirm that the probe can be a feasible solution for carrying out a real measurement on-line, during the operation of the plant, the method is highly complex and no example of practical implementation is provided in the patent. The inapplicability and the extreme complexity of this technique are demonstrated by the fact that the measurement system described does not appear to have been applied specifically to actual plants.

US 20070008540 A discloses a method for determining the concentration of particles of carbon or of dehydrogenated asphaltenes in a tar sampled from a Visbreaker, wherein the sample is subjected to infrared light.

Lastly, the international application WO2011068612 *"Application of Visbreaker analysis tools to optimize performances"* (General Electric) describes a process completely equivalent to that described in the patents by the present applicant Chimec (above) and based on the measurement of a parameter equivalent to the CV. In the process according to WO'612, the carbonaceous particles present in the bottom residue are counted on the sample by means of a reader (laser probe) which scans the slide placed beneath a microscope; in this case too, the count is performed in transparency and in the visible range. The results are always expressed in area of particles counted, and the handling of the sample is identical to that described in the methods reported in patents IT 1211978 and EP0529397-B1. The object of the present application is therefore to overcome the disadvantages inherent to the prior art processes and methods.

### Summary of the invention

The present invention is based on the unexpected discovery that dark particles present in a medium that is highly opaque to light can be visualized and counted in an extremely quick, effective and reproducible manner by means of analyses of the sample using radiation in the infrared (IR) range.

The invention is set out in the appended set of claims.

Given the ability of IR rays to pass through dark and opaque liquids, the technique lends itself particularly well to the counting of carbonaceous particles in the bottom residue of a thermal conversion and/or catalytic plant, without the need for the sample of such residue to be diluted or formed into a thin layer as in the previous techniques.

The present invention therefore relates, as a first object, to a method for determining the concentration of particles of carbon or of dehydrogenated asphaltenes in an oily fluid opaque to light radiations in the visible range, characterized in that a sample of fluid is subjected to infrared (IR) light irradiation and the radiation exiting the irradiated sample is reprocessed into a signal correlated to the concentration of said particles.

In particular, the signal is correlated with the particle concentration of the sample expressed as number of particles over residue volume (n/v or n/ml), as number of particles over weight (n/w or n/gr), as percentage of total particle area over field area (%), as particle volume over sample weight (v/w or µl/gr or I/kg), or as percentage of particle volume over volume of the residue sample analyzed (%).

In a preferred embodiment of the invention, the oily opaque fluid is the bottom residue (tar) of a petroliferous thermal conversion and/or catalytic process.

The oily opaque fluid is advantageously subjected to IR irradiation in a non-diluted form.

In a further embodiment of the invention, the determining of the concentration of particles of carbon or of dehydrogenated asphaltenes is carried out with the plant during thermal conversion operation.

In another embodiment of the invention, the sample is analyzed with an IR optical microscope.

In a still other embodiment of the invention, the method comprises an additional passage of reading of the carbonaceous mesophase with polarized IR light.

The second object of the invention is to an apparatus for determining the concentration of particles of carbon or of dehydrogenated asphaltenes in an oily fluid opaque to light radiations in the visible range, comprising an IR light source focusable on the sample to be analyzed, means for receiving the radiation exiting the sample, means for transforming the exiting radiation into a signal correlated to the concentration of particles present in the sample.

This apparatus may comprise the following elements: an automatic sampler, a reading chamber, a signal reprocessing unit, or, alternatively, a signal reprocessing and transfer unit.

In a specific embodiment, the reading chamber comprises an IR optical microscope. In another embodiment, the invention comprises an IR light polarizer to be inserted between the source and the video camera.

In another embodiment, the signal reprocessing unit comprises a video camera coupled to a monitor for representing the image of the analyzed sample.

The apparatus optionally comprises a thermostating chamber upstream of the reading chamber, and optionally means for removing the sample from the reading chamber.

In another embodiment, the apparatus is integrated into the thermal conversion plant via a bypass from the plant line.

The invention thirdly relates to a method for adjusting the operating conditions of a petroliferous thermal conversion plant, comprising the following steps:
- determining the concentration of particles of carbon or of dehydrogenated asphaltenes present in the bottom residue of the plant by subjecting a sample of the residue to infrared (IR) light irradiation,
- converting the radiation exiting the irradiated sample into a signal (CV/IR parameter) correlated to the concentration of said particles,
characterized in that the operating conditions of the plant are corrected in accordance with the CV/IR value determined. In particular, when the CV/IR parameter detects a carbonaceous charge higher than a preset limit threshold, either a decrease of the furnace temperature and/or an increase of the amount of stabilizing additives in the plant charge will be operated, in order to obtain a decrease of the fouling potential of the plant.

When the CV/IR parameter detects a carbonaceous charge lower than the preset threshold, an increase of the furnace temperature will be operated, with the entailed increase of light distilled fractions.

The signal correlated to the concentration of the particles of carbon or of dehydrogenated asphaltenes in the sample advantageously automatically triggers a series of operations correcting the operating conditions of the plant.

In a preferred embodiment, the sample of residue analyzed is in non-diluted form and/or the determining of the concentration of particles of carbon or of dehydrogenated asphaltenes in the sample of residue and the correcting of the conditions are carried out with the plant during operation and in real time.

### Description of the figures

Figure 1: Box A: Images obtained using the conventional CV. Box B: Other images obtained using CV/IR.
Figure 2: 3D elaboration of a 785 µm² CV field; the total volume of the particles is approximately 5%.
Figure 3: Graph showing the CV values (in µm²) on the abscissa against the CV/IR values (in % of area) on the ordinate: the trend line, which refers to all points, has a coefficient R² equal to 0.95, showing a good correlation between the two sets of values.
Figure 4: Results obtained from analyses of the CV/IR parameter.
Figure 5: Example of a completely automatic system of an apparatus according to the present invention.
Figure 6: Chart of a lens used in an apparatus according to the present invention.

### Detailed description of the invention

The innovative element of the methods and processes of the invention is the source of illumination of the sample: in the conventional methods for measuring particles, such as solid carbonaceous particles (of coke) and particles of dehydrogenated asphaltenes, the visible range is used, whereas in accordance with the new technology forming the basis of the present application, the CV parameter operates in the infrared range, and therefore the new parameter is referred to as CV/IR.

The choice of the type of irradiation was dictated by some basic aspects. In the visible range, unless working on microscopic layers (a few tens of microns) or at strong dilution, the samples appear completely black and therefore, in the conventional methods, a sample of minimal amount is prepared; only in this way is it possible to distinguish the carbonaceous particles from the rest of the black matrix. With an IR source however, the process is carried out in transmittance because the light is able to pass through a sample, often even 1-2 millimeters thick; this means that it is possible to examine a sample that is considerably more voluminous and therefore highly representative. The optimal thickness of the sample layer varies between 0.05 to 3 mm, preferably from 0.5 to 2 mm, for example 0.5 or 1.0 mm. Greater thicknesses can also be used. In fact, the rise in opacity can be overcome by increasing the power of the IR radiation source, and therefore the penetrating power thereof. However, if the sample to be analyzed is the bottom residue of a thermal conversion plant, it is considered that, above a certain intensity, the thermal energy of the electromagnetic radiations would liquefy the sample. A thickness greater than 3 mm is therefore not recommended, since this would make the sample completely black at the acceptable radiation intensities. Thickness less than 0.05 mm can certainly be used, but are less preferred since many of the advantages offered by the new technology, as discussed below, would disappear.

Another source of great uncertainty in the conventional measurements is the amount of sample analyzed: in all the prior art methods, the amount of residue sampled in order to be measured on the slide is minute (a few milligrams). Even when determining the ISI and when counting for dilution, which must result in transparent solutions, the amount of residue analyzed is less than one gram. These aliquots, which are decidedly small, are not sufficiently representative of the tons of fluid passing through the plant. The risk of the analyses carried out on the samples being insufficiently representative is therefore high. In the new method, the amount of sample analyzed is in the order of grams. The amount can in fact vary from 1 to 15 grams, for example 3, 5, 8, 10 and 13 grams, and is therefore much more representative of the total mass compared to a drop measuring a few milligrams.

This quantity of sample can be placed on a substrate transparent to IR light, for example a glass or quartz substrate, such as a plate (Petri plate), a cuvette, a cell or an equivalent container or simply a slide/cover slide system. The set amount is placed on the substrate so as to form a layer of the above-indicated thickness.

The possibility, in the present procedure, of using sample layers having a thickness in the order of millimeters rather than microns offers an enormous additional advantage compared to the prior art methods. Such advantage lies in the possibility of carrying out a sort of "stratigraphy" of the sample so as to observe and count the three-dimensional particles stratified over different planes in the thickness of the sample itself.

For samples with low fouling and therefore containing very few particles dispersed in the residue, the conventional microscopy methods struggle to observe the particles, given that the focused sample is very small and thin. This results in a very low reproducibility of the measurement in that the area measured depends on the number of focused particles. On the contrary, the method of the invention solves this problem in that a reading is carried out on each shot over more focal planes. In other words, a reading is carried out for the entire thickness of the residue layer. When the measured thickness is a few microns, the focal planes measurable are very few or even only one; instead, if the thickness is some millimeters, as in the method of the invention, the focal planes can be rather numerous. Capturing just one shot, it is therefore possible to take a reading over "n" focal planes and to carry out a count that is much more precise. The advantage is easily deducible. In the visible range working on a layer of approximately 5 microns and with an ocular lens with 10 or 20 times magnification, similarly to that which is usually used, it is possible to focus and therefore to count particles over one or both layers at most. On the contrary, using an IR technique and working over one layer of 0.5-2 mm, it is possible to carry out "n" stratified focusings, for example from 5 microns each where "n" is directly proportional to the thickness of the analyzed sample.

For example, considering a single focal plane of 5 microns, n will be equal to 1 mm/5 microns = 1000/5 microns = 200 focal planes. It is therefore possible to observe the particles distributed over all 200 focal planes, simply by focusing progressively over 200 planes without moving the ocular lens of the microscope. This is a procedure that can be easily carried out by any computerized apparatus, for example a microscope, assisted by suitable software.

Transforming into volume the amount of read residue (practically at the same time), in the case of techniques in the visible range with slide, the read volume is 3,000,000 cubic microns (ocular lens field: approximately 600,000 microns² multiplied by the thickness of the layer equal to 5 microns). For the new technology, the read volume, in the case of a thickness of 1 mm (1000 microns), is 600,000,000 cubic microns (600,000 microns² for 1,000 microns of thickness) or 200 times greater.

The particles in the medium, being three-dimensional, can be seen in more than one plane, which may result in an overestimation of the number of particles. However, the particles will be measured with sharp focus only in one plane. If an apparatus equipped with a software that operates in EDF mode (extended depth of field - in some software also referred to as EFI - extensible firmware interface) is used however, the particle is taken into consideration and counted only when it is located in the plane in which its black point (focus) is maximum and more sharply defined. This procedure therefore makes it possible to obtain highly reliable results.

The counting of the particles can also be conveniently assisted by a suitable software able to add together the areas of all the particles observed in their maximum focal definition point, instead eliminating those not in focus (EDF mode): in this mode, only one image will be obtained and will contain all the particles present in the analyzed volume.

In addition, the insertion of an IR light polarizer makes it possible to define and show carbonaceous mesophase zones, which are clearly distinguishable from the rest of the residue.

The carbonaceous mesophase, or crystalline liquid coke, is normally formed when the charge of the cracking plant contains aromatics having a low number of rings, few side chains and low content of heteroatoms.

The presence of the carbonaceous mesophase is a clear sign of coke precursors and therefore of possible fouling.

The use of polarized IR light constitutes a very valid qualitative and quantitative means for evaluating the conversion of residues and the mechanisms of solubility of dehydrogenated asphaltenes.

Apparatuses suitable for carrying out the method of the invention are composed of known elements that are commercially available.

Although specific elements of the equipment will be described below, it is necessary to clarify that the invention relates generically to the use of IR light radiation for the quantification of solid or semi-solid particles in a liquid medium, which is normally dense and normally opaque, if not black. The invention therefore does not relate to the specific tools for carrying out such quantification, these tools in no way limiting the scope of protection conferred.

Any system that contains an IR light source, focusable on the sample to be analyzed, means for receiving the radiation exiting the sample, and means for processing the exiting radiation and for transforming said radiation into a signal correlated to the concentration of particles present in the sample, can therefore be used conveniently to carry out the present invention.

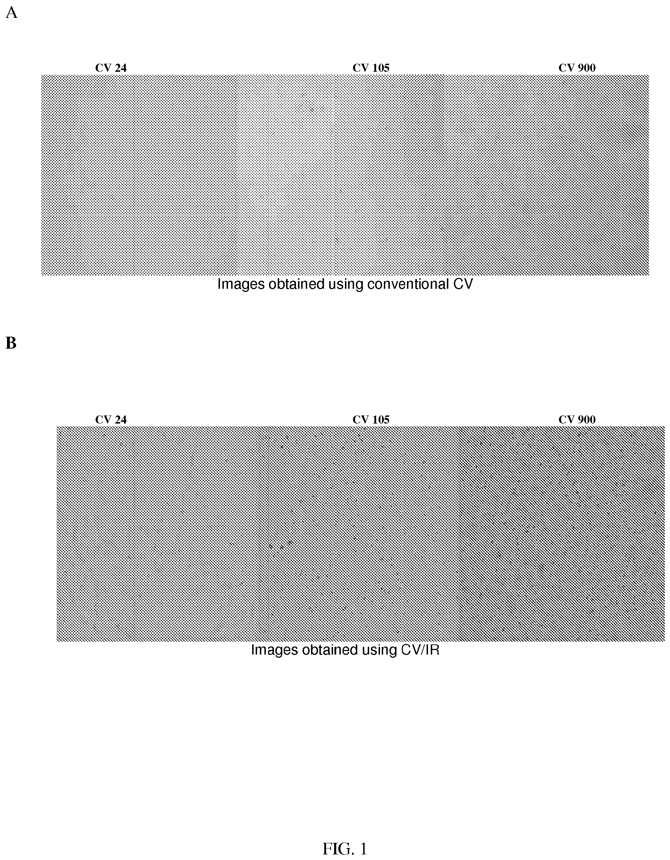

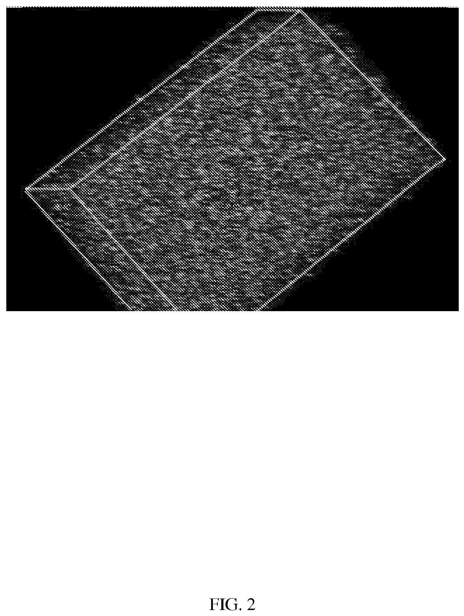

The apparatus may additionally contain tools, normally assisted by suitable software, able to transform the signal into a usable form. For example, the signal may be reproduced in planar photographic form (figure 1) or three-dimensionally (figure 2) so as to enable single or integrated counting of the number and/or of the concentration and/or of the sums of the areas of the particles. The signal can be reproduced in graph form, reflecting the number, concentration and/or area of the particles in the sample. The signal can also be transformed into a command that triggers a series of operations aimed at correcting one or more operative conditions of the thermal conversion plant. None of these options is mutually exclusive.

In an embodiment of the invention, a possible configuration of the equipment comprises or is composed of an IR optical microscope. The microscope is equipped with a lens of defined magnification, for example 10, 20, 30,40 or 50 times. The lens is preferably a 10x or 20x lens.

The apparatus may comprise a system for acquiring, processing, transferring and analyzing data (DOCU FIVE or ImagePro or Stream Essential, etc.). For example, means for receiving the IR signal, means for transforming the IR radiation into an image or into a signal, means for optical reproduction, for example a monitor. The apparatus may comprise a video camera, for example an Olympus XC10 IR or Qlmaging QIClick or Qlmaging QICAM video camera.

LED light sources, specifically for emission in the IR range, could be as follows: Dragon1IR PowerStars.

Tens of other components are offered on the market for each single stage of the microscope analyses. In addition, it is possible to assemble the suitable components in accordance with a conventional model of an optical transmission microscope so as to obtain a tool that is personalized in respect of the requirements.

The unit for analyzing the sample may be independent or inserted within an integrated control system placed directly on the thermal conversion or catalytic plant, so as to allow the monitoring of the characteristics of the bottom residue or the monitoring of the charge of the plant in real time and during the working cycle, therefore with the plant functioning.

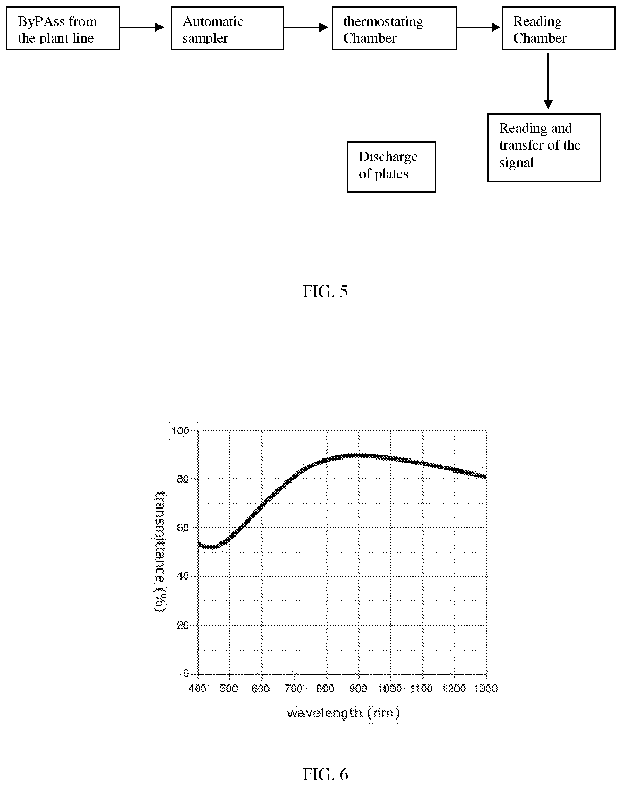

This monitoring can be carried out manually by an operator or automatically by a computerized control system at regular intervals, for example every 24, 12, 6 or 3 hours, or every hour, or also continuously, adopting a step-by-step process with successive samplers by means of a bypass from the plant line. A specific example of a fully automatic system is illustrated in figure 5.

### Bypass from the plant line

The bypass from the hot line of the residue is necessary to:
- ensure the reproducibility of the sampled fluid. In fact, in the bypass, the fluid is in continuous flow and periodic sampling is carried out on an aliquot absolutely representative of the process fluid.
- bring the process fluid into the desired position for the positioning of the tool on-line. This occurs without constructing lines of greater dimensions and without moving large quantities of fluid at high temperature.
- The lines constituting the bypass must be thermostated so as to maintain the temperature of the main line. This will therefore be dependent on the characteristics of the automatic sampler if an exchanger is inserted to regulate the temperature before the entry to the sampler itself. Possible exchangers could work with water or with cooling fluids (for example glycol)

### Automatic sampler

The objective of the automatic sampler is to take the sample directly from the bypass of the production line. The aliquot obtained will be transferred within suitable carriers (for example glass Petri plates from 80 or 100 or 150 mm diameter). Various types of automatic samplers that can be used for the sampling of fluid at high temperature and viscosity are available on the market (Isolok-Sentry Equipment type or Dopak-Sampling Systems). Alternatively, it is possible to produce a sampler of specific design, for example enabling a washing of the sample itself, once the residue has been sampled, using a suitable solvent (for example diesel oil).

The samplers that can be used could be formed for example by:
- A series of valves with automated opening, either electric or operating by means of compressed air, for enabling sampling, cleaning and closing of the circuit. The valves are preferably piston valves formed of AISI 316 stainless steel with seals made of PTFE, polyurethane, EPDM rubber or Kalrez.
- A cleaning system, functioning with a suitable solvent (diesel oil, glycol, etc.), or functioning with suitable gases (air or nitrogen) or with a needle. Such a system ensures the functioning of the sampler and avoids blockages formed by the hardened and solidified residue. In addition, it prevents pollution by contamination of prior samplings. A receptacle for containing the solvent used for the cleaning could be necessary.
- Automatic monitoring of the valves, for example based on PLC, interfaced with the software managing the entire sampling and reading system.

### Movement of the sample (thermostating chamber and reading chamber)

The unit for moving the sample will be appointed the task of removing the plate from the sampler and moving it until it reaches the reading device. This unit could be formed by:
- a system for linear movement over three axes. The first two axes will move over the horizontal planes (X and Y) in order to position the plate beneath the pick-up system, whereas the third axis will be dedicated to the movement of the focal plane. The plate will be controlled by means of electric pincers, which will remove it from the sampler and hold it in position until the reading process is complete, then release it again in the appropriate discharge zone. The scanning of the useful area of the plate, where the sample will be located, will always be managed by means of the precision movement system.
- A system made completely of stainless steel (AISI 304), formed by two disks rotating relative to one another, one fixed with the task of supporting the step-down motor provided for the movement and the second tasked with supporting the Petri dishes and allowing movement thereof in various positions (charging, dosing, heating, cooling, analyses, discharge).

The plates will therefore be processed and agitated within the sampler and made available at the end of the process for the acquisition section.

The presence of security sensors of various type along the entire path covered by the plate is also envisaged for the purpose of preventing collisions with parts of the tool or incorrect positioning of the plate itself.

It is necessary to provide a Petri dish loader, which will enable stand-alone insertion of the dishes and which will therefore be assembled within the sampler, thus enabling the machine to be reloaded easily and quickly.

Lastly, a control system (HW+SW is provided), which will make it possible to position the sample to be analyzed at a programmable pace corresponding to the dispenser. It will therefore send a signal to start dosing to the dispenser. Once dispensing is complete, it will receive an approval signal and will move the plate in the thermostating chamber. This section, provided with a thermostating system which functions by vapor or by means of electrical resistance, will initially heat to 100 °C (to allow homogenization of the sample on the plate) and then cool to 40 °C, monitoring the temperature by means of an infrared thermometer.

When the Petri dish with the material to be analyzed is located in analysis position, the control system will send a signal to enable the microscope, which will then start the analysis, then will be in a waiting state until it receives a message or a signal indicating that the analysis is complete.

The sampler will be supplemented by switchboard, having alarms for any malfunctions (breakage of the system for heating/cooling the sample, thermal trip for step-down motors, signaling of the presence of last 4 dishes in the loader), as well as a series of interrupters and sectioners. The reading chamber will be equipped with the dedicated single-lens IR system, complete with LED condenser and IR illuminator and with monochrome digital video camera with extended sensitivity in the IR range.

### Reading and transfer of the signal

The entire unit will be managed by means of a local workstation which will monitor the entire process of movement and image capture. The workstation will be controlled remotely (Ethernet connection) from the main analysis station located in the control room.

The software managing all the hardware components present in the acquisition unit must be developed entirely *ad hoc.* An analysis unit formed by a second, suitably configured PC workstation that carries out the control functions on acquisition and sampling units will therefore be necessary. The entire process will be controlled by means of this unit, without the need for the operator to be present in the sampling area (except for the procedures of loading the plates and maintaining the system). The images acquired by the appointed unit will be automatically transferred to the analysis workstation and quantified in accordance with the CV protocol. Here, they will remain archived for potential subsequent checks. In this case too, the managing and analysis software will be developed *ad hoc.*

### Discharge of plates

The plates containing the samples already read will be discharged into a suitable container, which must be emptied periodically by an operator.

The measurement of the CV/IR parameter according to the present invention can be utilized in all the applications already described in the prior art for the prior CV parameter in the management of a petroliferous thermal conversion and/or catalytic plant. The present invention therefore further relates to a procedure for optimizing the operative conditions of a plant based on the monitoring of the CV/IR. To this end, all the applications described and claimed in the prior patents in the name of the applicant, that is to say IT 1211978, EP0529397 and IT1211979, are integrated in the present application.

In particular, the optimization of the operative conditions is finalized with the reduction of the fouling power of the plant or the rise of the light fractions of the distillation. In the first case, when the CV/IR parameter detects a carbonaceous charge higher than a preset limit threshold, either a decrease of the furnace temperature or an increase of the amount of stabilizing additives in the plant charge will be operated. In the second case, when the CV/IR parameter detects a carbonaceous charge lower than a maximum acceptable threshold, an increase of the furnace temperature will be operated, with the entailed increase of light fractions. The advantages offered by the invention compared to the prior methods based on the calculation of the CV parameter are many. The level of manual input required by the prior methods (including the calculation of the CV) is rather complex, the handling of the sample includes a series of rather delicate operations, and this is in turn reflected in the poor reproducibility of the measurement. It has been demonstrated how different operators provide different results with the same sample. The new method does not include any handling of the sample: the residue sample, as collected and without any dilution, must simply be poured in a fixed amount into the measurement receptacle. In an automated process, the sample is usually placed directly in the reading chamber without preliminary dilution. This comprises a very high level of accuracy and reproducibility, particularly in cases with low amounts of particles.

In addition, as seen above, the method allows the analysis of samples of extremely high mass (from 3 to 15 gr per reading), which are therefore absolutely representative of the entire residue produced by the plant.

The invention described hitherto in general terms will now be described with all the experimental details and results in the following experimental example, which is provided merely by way of illustration and is non-limiting.

### Experimental example

### Tools used

A possible configuration of the equipment selected from countless other commercial solutions is constituted by:
Olympus BX51M IR optical microscope.

The microscope is equipped with a lens having defined magnification, preferably a 10x or 20x lens. An optics that can be used is **LMPL10XIR/0.25**

An IR fluorite semiaprochromatic lens with WD (working distance) 18.5 mm having optical characteristics illustrated in the graph shown in figure 6.

900 nm IR-DIC polarizer, 360° rotatable intermediate IR orthoscopic analyzer, Optical Cast Plastic IR Longpass Filter 2" Diam., Universal achromatic/aplanatic condenser, 4 positions
XC10 IR or Qlmaging QIClick and Qlmaging QICAM video camera.

System for acquiring, processing and analyzing images (DOCU FIVE or ImagePro or Stream Essential, etc.).
LED light source, specifically for emission in the IR range, could be as follows: Dragon1IR PowerStars;
Tens of other components are offered on the market for each single stage of the microscope analyses. In addition, it is possible to assemble the suitable components in accordance with a conventional model of an optical transmission microscope so as to obtain a tool that is personalized in respect of the requirements

### Image acquisition

The images can be acquired in order to be compared with a reference image (example A) or in a completely independent manner (example B):
**Example A**
   - Source intensity: by comparison with reference.
   - Diaphragm aperture: by comparison with reference.
   - Collimator height: fixed.
   - Condenser aperture: fixed.
   - Automatic exposure.
   - No filter.
   - Sample thickness: 400 µm - 600 µm.
   - EDF (extended depth of field) acquisition.
**Example B**
   - Source intensity: photographic light; in this way, a radiation that is very stable and that is of predetermined intensity is obtained.
   - Diaphragm aperture: 0.3.
   - Collimator height: fixed.
   - Condenser aperture: variable depending on the lens used.
   - Automatic exposure.
   - High-pass filter 900+.
   - Sample thickness: 400µm - 600µm.
   - EDF (extended depth of field) acquisition.

### Image processing

Depending on the type of acquisition, it is possible to process the obtained images using different procedures. Two non-limiting examples are provided:
**Example A**
   - Application of a filter for background correction. Tens of these exist, but it is preferable to use the DCE (dynamic channel equalizer) filter, which optimizes the cubic area of the pixels so as to eliminate signals too far from the close weighted average.
   - Two analyses of the phases are possible: RYB and HSI. RYB (red yellow blue) is normally indicated more to study color images, and therefore a study of the HSI (hue saturation intensity) type is preferred.
Example B
   - Background correction.
   - Recognition of the edges as identification of the particles, however there are tens of other systems for identification of the particles.
   - Insertion of a threshold which discriminates the contrast of the recognized edges.
   - Exclusion of the particles having dimensions smaller than the resolution of the microscope.
   - Exclusion of any particles having a grey value close to that of the background, since these are caused by shadows and not by real particles.

### Obtained images

The images of the analyses with the EDF method are shown in figure 1.

In addition to an EDF image, an acquisition in sequence of a series of images also enabled successive processing to obtain a three-dimensional image. A three-dimensional image relating to a sample with CV 785 is shown in figure 2.

### Results compared with conventional CV

The measurements inserted into table 1 below were obtained on residue samples of a visbreaker process or of a combustible oil. In parallel, CV measurements were taken and also, on the same sample, particle count measurements using the new IR microscope.

| Values | | |
|---|---|---|
| | CV (um²) | CV/IV (% of area) |
| 1 | **35** | **0.43** |
| 2 | **105** | **1.58** |
| 3 | **900** | **10.02** |
| 4 | **24** | **0.13** |
| 5 | **71** | **1.10** |
| 6 | **251** | **6.14** |
| 7 | **263** | **3.89** |
| 8 | **84** | **3.21** |
| 9 | **103** | **2.59** |
| 12 | **251** | **6.14** |
| 11 | **419** | **9.46** |
| 12 | **116** | **4.61** |
| 13 | **191** | **6.92** |
| 14 | **2137** | **28.68** |
| 15 | **158** | **1.61** |
| 16 | **49** | **1.24** |
| 17 | **125** | **0.85** |
| 18 | **48** | **0.57** |
| 19 | **104** | **1.67** |
| 20 | **637** | **12.17** |
| 21 | **1298** | **16.41** |
| 22 | **1841** | **25.16** |
| 23 | **984** | **11.98** |
| 24 | **78** | **1.31** |
| 25 | **123** | **1.67** |
| 26 | **55** | **0.84** |

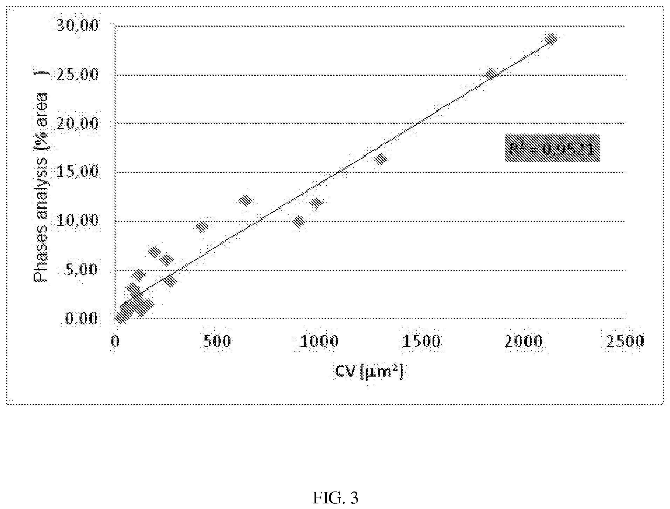

The values found, even if measured using different measurement units (µm² compared with % of total area), reveal a corresponding trend, except for the low values. It is quite understandable that the greatest disparity found between conventional CV and CV/IR lies in the low values, where the CV struggles to focus a sufficient number of particles in order to obtain a reliable value; with CV/IR instead, where a number of much greater particles are counted, the value is more reliable. In fact, with CV/IR, all the focal planes possible are counted for each shot over a thickness of some millimeters; each IR reading therefore represents a conventional reading repeated n times. Illustrating in a graph the CV values (in µm2) on the abscissa and the CV/IR values (in % of area) on the ordinate, a distribution over the Cartesian plane of the obtained values is produced: the trend line, which refers to all points, has a coefficient R2 equal to 0.95, showing a good correlation between the two sets of values. (Figure 3).

### Results of reproducibility tests

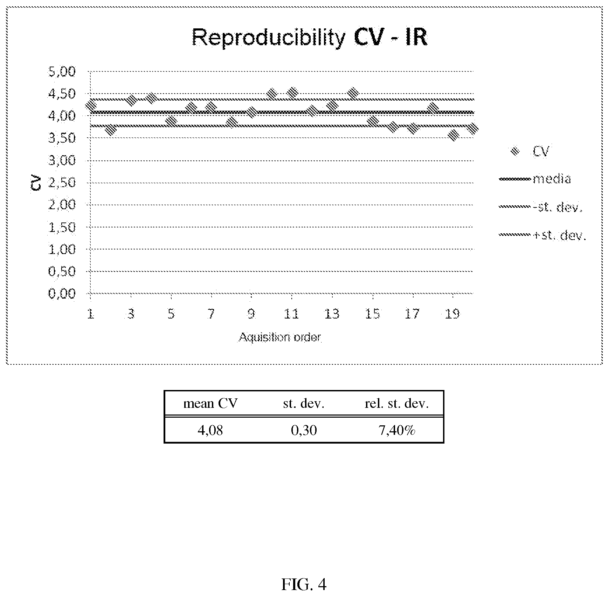

The statistical distribution of twenty acquisitions using CV/IR performed on the sample with the lowest CV possible was calculated, in this case the CV/IR being expressed as a percentage of area covered by the particles compared to the total area of the images. In the graph illustrated in figure 4, the distribution of the values obtained using CV/IR is shown.

### Other results of reproducibility tests

The CV/IR was read after having prepared six Petri plates, filling them with the same residue sample. The same sample was then analyzed six times after having been homogenized, taking six different aliquots measuring approximately 4 grams, and carrying out the IR reading 5 random times in the Petri plates obtained. The six samples were called a, b, c, d, e and f, and the measured sum of the areas of the particles was expressed in area %.

The results with the standard deviations are shown in the tables below.

| | | | |
|---|---|---|---|
| | 3.77 | | |
| **a** | 3.61 | mean | 3.59 |
| | 3.52 | st. dev. | 0.23 |
| | 3.81 | rel st. dev. | 6.36 |
| | 3.24 | | |

| | | | |
|---|---|---|---|
| | 3.23 | | |
| **b** | 3.17 | mean | 3.24 |
| | 3.31 | st. dev. | 0.08 |
| | 3.16 | rel st. dev. | 2.41 |
| | 3.33 | | |

| | | | |
|---|---|---|---|
| | 3.38 | | |
| **c** | 3.14 | mean | 3.42 |
| | 3.66 | st. dev. | 0.23 |
| | 3.65 | rel st. dev. | 6.75 |
| | 3.27 | | |

| | | | |
|---|---|---|---|
| | 3.19 | | |
| **d** | 3.68 | mean | 3.29 |
| | 3.40 | st. dev. | 0.27 |
| | 3.23 | rel st. dev. | 8.13 |
| | 2.96 | | |

| | | | |
|---|---|---|---|
| | 3.25 | | |
| **e** | 3.12 | mean | 3.42 |
| | 3.71 | st. dev. | 0.26 |
| | 3.33 | rel st. dev. | 7.72 |
| | 3.68 | | |

| | | | |
|---|---|---|---|
| | 3.29 | | |
| **f** | 3.08 | mean | 3.09 |
| | 3.02 | st. dev. | 0.14 |
| | 3.15 | rel st. dev. | 4.61 |
| | 2.91 | | |

As illustrated in the table below presenting a summary, all of the measurements carried out are very similar, within an error of 8 %; in addition, no differences were observed between one plate and another, confirming the fact that a sample of approximately 4 grams is absolutely representative of the entire residue sampled from the plant.

| of the 6 means | | of the 30 measurements | |
|---|---|---|---|
| mean | 3.34 | mean | 3.34 |
| st. dev. | 0.17 | st. dev. | 0.25 |
| rel st. dev. | 5.18 | rel st. dev. | 7.54 |

## Claims

1. A method for determining the concentration of particles of carbon or of dehydrogenated asphaltenes in an oily fluid opaque to light radiations in the visible range, in a sample in the form of layer of a thickness of 0.05 to 3 mm and is subjected to infrared (IR) light irradiation and the radiation exiting the irradiated sample is reprocessed by an optically reading device into a CV/IR parameter, wherein said parameter corresponds to the number of dark punctiform particles present in a bottom residue (tar) (CV) visualized and counted by means of analyses of the sample using radiation in the infrared (IR) range, wherein said sample subjected to IR irradiation, is placed on a support transparent to IR radiation, and said device carries out a counting of said particles on plural focal planes, whereby a three-dimensional reading is obtained, wherein said CV/IR parameter is expressed as number of particles over residue volume (n/v or n/ml), as number of particles over weight (n/w or n/g), as percentage of total particle area over field area (%), as particle volume over sample weight (v/w or µl/g or I/kg), as percentage of particle volume over volume of residue sample analyzed (%).

2. The method according to claim 1, wherein the opaque oily fluid is the bottom residue (tar) of a petroliferous thermal conversion and/or catalytic process.

3. The method according to any one of the preceding claims, wherein the sample of opaque oily fluid is subjected to IR irradiation in a non-diluted form.

4. The method according to any one of the preceding claims, wherein the determining of the concentration of particles of carbon or of dehydrogenated asphaltenes is carried out with the conversion process under way.

5. The method according to any one of the preceding claims, wherein the sample is analyzed with an IR microscope.

6. The method according to claim 5, wherein said microscope has an IR light polarizer, and comprising an additional step of reading the carbonaceous mesophase.

7. Use of an apparatus for determining the concentration of particles of carbon or of dehydrogenated asphaltenes in an oily fluid opaque to light radiations in the visible range, comprising an IR light source focusable on the sample to be analyzed, the IR light being able to pass through a sample of a thickness of 0.05 to 3 mm, means for counting of said particles on plural focal planes, means for receiving the radiation exiting the sample, means for transforming the exiting radiation into a signal correlated to the concentration of particles present in the sample, a reading chamber and a thermostating chamber upstream of the reading chamber.

8. The use according to claim 7, wherein the apparatus comprises the following elements: an automatic sampler, a signal reprocessing unit, or, alternatively, a signal reprocessing and transfer unit.

9. The use according to claims 7 or 8 wherein said reading chamber comprises an IR optical microscope.

10. The use according to claim 9, wherein said IR optical microscope comprises an IR light polarizer.

11. The use according to claim 10, wherein said microscope can carry out readings on different overlapped focal planes, whereby a three-dimensional reading is obtained.

12. The use according to any one of the claims 7 to 11, wherein the signal reprocessing unit is a chamber coupled to a monitor for representing the image of the analyzed sample.

13. The use according to any one of the claims 7 to 12, and optionally means for removing the sample from the reading chamber.

14. The use according to any one of the claims 7 to 14, integrated into the thermal conversion plant via a bypass from the plant line.

15. A method of adjusting the operating conditions of a petroliferous thermal or catalytic conversion plant, comprising the following steps:
determining the concentration of particles of carbon or of dehydrogenated asphaltenes present in the bottom residue of the plant by subjecting to infrared (IR) light irradiation a sample of the residue in the form of layer of a thickness of 0.05 to 3 mm, wherein the sample is placed on a support transparent to IR radiation,
converting the radiation exiting the irradiated sample into a CV/IR parameter, a CV/IR parameter, wherein said parameter corresponds to the number of dark punctiform particles present in a bottom residue (tar) (CV) visualized and counted by means of analyses of the sample using radiation in the infrared (IR) range, wherein said CV/IR parameter is expressed as number of particles over residue volume (n/v or n/ml), as number of particles over weight (n/w or n/g), as percentage of total particle area over field area (%), as particle volume over sample weight (v/w or µl/g or l/kg), as percentage of particle volume over volume of residue sample analyzed (%),
**characterized in that** the operating conditions of the plant are corrected in accordance with the CV/IR value determined.

16. The method according to claim 15, **characterized in that** when the CV/IR parameter detects a carbonaceous charge higher than a preset limit threshold, either a decrease of the furnace temperature or an increase of the amount of stabilizing additives in the plant charge will be operated, in order to obtain a decrease of the fouling potential of the plant.

17. The method according to claim 16, **characterized in that** when the CV/IR parameter detects a carbonaceous charge lower than a maximum acceptable threshold, an increase of the furnace temperature will be operated, with the entailed increase of light distilled fractions.

18. The method according to any one of the claims 16 to 17, wherein the signal correlated to the concentration of the particles of carbon or of dehydrogenated asphaltenes in the sample automatically triggers a series of operations correcting the operating conditions of the plant.

19. The method according to any one of the claims 16 to 18, wherein the sample of residue analyzed is in non-diluted form.

20. The method according to any one of the claims 16 to 19, wherein the determining of the concentration of particles of carbon or of dehydrogenated asphaltenes in the sample of residue and the correcting of the conditions are carried out with the plant during operation and in real time.

## Patentansprüche

1. Verfahren zum Bestimmen der Konzentration von Kohlenstoffpartikeln oder dehydrierter Asphaltene in einem öligen Fluid, das für Lichtstrahlungen in dem sichtbaren Bereich undurchlässig ist, in einer Probe in der Form einer Schicht mit einer Dicke von 0,05 bis 3 mm und die einer Infrarotlichtbestrahlung (IR-Lichtbestrahlung) unterzogen wird, und wobei die Strahlung, die aus der bestrahlten Probe austritt, durch eine optisch ablesende Vorrichtung zu einem CV/IR-Parameter weiterverarbeitet wird, wobei der Parameter der Anzahl dunkler punktförmiger Partikel, die in einem Bodenrückstand (Teer) (CV) vorhanden sind, entspricht, wobei sie mittels Analysen der Probe unter Verwendung von Strahlung in dem Infrarotbereich (IR-Bereich) visualisiert und gezählt werden, wobei die Probe, die der IR-Bestrahlung unterzogen wird, auf einen Träger der für IR-Strahlung transparent ist, platziert wird und die Vorrichtung eine Zählung der Partikel auf mehreren Fokalebenen durchführt, wodurch eine dreidimensionale Ablesung erhalten wird, wobei der CV/IR-Parameter als Anzahl von Partikeln pro Rückstandsvolumen (n/v oder n/ml), als Anzahl von Partikeln pro Gewicht (n/w oder n/g), als Prozentsatz von Gesamtpartikelfläche pro Feldfläche (%), als Partikelvolumen pro Probengewicht (v/w oder µl/g oder l/kg), als Prozentsatz von Partikelvolumen pro Volumen analysierter Rückstandsprobe (%) ausgedrückt wird.

2. Verfahren nach Anspruch 1, wobei das undurchlässige ölige Fluid der Bodenrückstand (Teer) eines erdölführenden thermischen Umwandlungs- und/oder katalytischen Prozesses ist.

3. Verfahren nach einem der vorstehenden Ansprüche, wobei die Probe undurchlässigen öligen Fluids in einer unverdünnten Form einer IR-Bestrahlung unterzogen wird.

4. Verfahren nach einem der vorstehenden Ansprüche, wobei das Bestimmen der Konzentration von Kohlenstoffpartikeln oder dehydrierter Asphaltene bei laufendem Umwandlungsprozess durchgeführt wird.

5. Verfahren nach einem der vorstehenden Ansprüche, wobei die Probe mit einem IR-Mikroskop analysiert wird.

6. Verfahren nach Anspruch 5, wobei das Mikroskop einen IR-Lichtpolarisator aufweist, und umfassend einen zusätzlichen Schritt des Ablesens der kohlenstoffhaltigen Mesophase.

7. Verwendung einer Einrichtung zum Bestimmen der Konzentration von Kohlenstoffpartikeln oder dehydrierter Asphaltene in einem öligen Fluid, das für Lichtstrahlungen in dem sichtbaren Bereich undurchlässig ist, umfassend eine IR-Lichtquelle, die auf die zu analysierende Probe fokussierbar ist, wobei das IR-Licht fähig ist, eine Probe mit einer Dicke von 0,05 bis 3 mm zu durchdringen, Mittel zum Zählen der Partikel auf mehreren Fokalebenen, Mittel zum Empfangen der Strahlung, die aus der Probe austritt, Mittel zum Transformieren der austretenden Strahlung in ein Signal, das mit der Konzentration von Partikeln, die in der Probe vorhandenen sind, korreliert, eine Ablesekammer und eine Thermostatisierungskammer stromaufwärts der Ablesekammer.

8. Verwendung nach Anspruch 7, wobei die Einrichtung die folgenden Elemente umfasst: einen automatischen Probennehmer, eine Signalweiterverarbeitungseinheit oder, alternativ, eine Signalweiterverarbeitungs- und Übertragungseinheit.

9. Verwendung nach Anspruch 7 oder 8, wobei die Ablesekammer ein optisches IR-Mikroskop umfasst.

10. Verwendung nach Anspruch 9, wobei das optische IR-Mikroskop einen IR-Lichtpolarisator umfasst.

11. Verwendung nach Anspruch 10, wobei das Mikroskop Ablesungen auf verschiedenen überlappenden Fokalebenen durchführen kann, wodurch eine dreidimensionale Ablesung erhalten wird.

12. Verwendung nach einem der Ansprüche 7 bis 11, wobei die Signalweiterverarbeitungseinheit eine Kammer ist, die mit einen Monitor zum Darstellen des Bildes der analysierten Probe gekoppelt ist.

13. Verwendung nach einem der Ansprüche 7 bis 12 und gegebenenfalls Mittel zum Entfernen der Probe aus der Ablesekammer.

14. Verwendung nach einem der Ansprüche 7 bis 14, über einen Bypass von der Anlagenleitung in die thermische Umwandlungsanlage integriert.

15. Verfahren zum Einstellen der Betriebsbedingungen einer erdölführenden thermischen oder katalytischen Umwandlungsanlage, umfassend die folgenden Schritte:
Bestimmen der Konzentration von Kohlenstoffpartikeln oder dehydrierter Asphaltene, die in dem Bodenrückstand der Anlage vorhanden sind, durch Unterziehen einer Probe des Rückstands in der Form der Schicht mit einer Dicke von 0,05 bis 3 mm der Infrarotlichtbestrahlung (IR-Bestrahlung), wobei die Probe auf einen Träger, der für IR-Strahlung transparent ist, platziert wird,
Umwandeln der Strahlung, die aus der bestrahlten Probe austritt, in einen CV/IR-Parameter, einen CV/IR-Parameter, wobei der Parameter der Anzahl dunkler punktförmiger Partikel, die in einem Bodenrückstand (Teer) (CV) vorhanden sind, entspricht, wobei sie mittels Analysen der Probe unter Verwendung von Strahlung in dem Infrarotbereich (IR-Bereich) visualisiert und gezählt werden, wobei der CV/IR-Parameter als Anzahl von Partikeln pro Rückstandsvolumen (n/v oder n/ml), als Anzahl von Partikeln pro Gewicht (n/w oder n/g), als Prozentsatz von Gesamtpartikelfläche pro Feldfläche (%), als Partikelvolumen pro Probengewicht (v/w oder µl/g oder l/kg), als Prozentsatz von Partikelvolumen pro Volumen analysierter Rückstandsprobe (%) ausgedrückt wird,
**dadurch gekennzeichnet, dass** die Betriebsbedingungen der Anlage gemäß dem bestimmten CV/IR-Wert korrigiert werden.

16. Verfahren nach Anspruch 15, **dadurch gekennzeichnet, dass**, wenn der CV/IR-Parameter eine kohlenstoffhaltige Ladung, die höher als ein festgelegter Grenzwert ist, erfasst, entweder eine Verringerung der Ofentemperatur oder eine Erhöhung der Menge stabilisierender Additive in der Anlagenladung ausgeführt wird, um eine Verringerung des Fouling-Potenzials der Anlage zu erhalten.

17. Verfahren nach Anspruch 16, **dadurch gekennzeichnet, dass**, wenn der CV/IR-Parameter eine kohlenstoffhaltige Ladung, die niedriger als ein maximal zulässiger Schwellenwert ist, erfasst, eine Erhöhung der Ofentemperatur ausgeführt wird, mit der damit einhergehenden Erhöhung leichter destillierter Fraktionen.

18. Verfahren nach einem der Ansprüche 16 bis 17, wobei das Signal, das mit der Konzentration der Kohlenstoffpartikel oder dehydrierter Asphaltene in der Probe korreliert, eine Reihe von Vorgängen, die die Betriebsbedingungen der Anlage korrigieren, automatisch auslöst.

19. Verfahren nach einem der Ansprüche 16 bis 18, wobei die analysierte Rückstandsprobe in unverdünnter Form vorliegt.

20. Verfahren nach einem der Ansprüche 16 bis 19, wobei das Bestimmen der Konzentration von Kohlenstoffpartikeln oder dehydrierter Asphaltene in der Rückstandsprobe und das Korrigieren der Bedingungen mit der Anlage während eines Betriebs und in Echtzeit durchgeführt werden.

## Revendications

1. Procédé permettant de déterminer la concentration de particules de carbone ou d'asphaltènes déshydrogénés dans un fluide huileux, opaque à des rayonnements lumineux dans la plage visible, dans un échantillon sous la forme d'une couche d'une épaisseur de 0,05 à 3 mm et qui est soumis à une irradiation de lumière infrarouge (IR) et le rayonnement sortant de l'échantillon irradié est retraité par un dispositif de lecture optique en un paramètre CV/IR, dans lequel ledit paramètre correspond au nombre de particules ponctuelles sombres présentes dans un résidu de fond (goudron) (CV), visualisées et comptées au moyen d'analyses de l'échantillon à l'aide d'un rayonnement dans la plage infrarouge (IR), dans lequel ledit échantillon soumis à une irradiation IR, est placé sur un support transparent au rayonnement IR, et ledit dispositif effectue un comptage desdites particules sur plusieurs plans focaux, moyennant quoi une lecture tridimensionnelle est obtenue, dans lequel ledit paramètre CV/IR est exprimé en tant que nombre de particules par rapport au volume de résidu (n/v ou n/ml), en tant que nombre de particules par rapport au poids (n/poids ou n/g), en tant que pourcentage d'aire totale de particules par rapport à l'aire de champ (%), en tant que volume de particules par rapport au poids d'échantillon (volume/poids ou µl/g ou l/kg), en tant que pourcentage de volume de particules par rapport au volume d'échantillon de résidu analysé (%).

2. Procédé selon la revendication 1, dans lequel le fluide huileux opaque est le résidu de fond (goudron) d'un processus de conversion thermique et/ou catalytique de matières pétrolifères.

3. Procédé selon l'une quelconque des revendications précédentes, dans lequel l'échantillon de fluide huileux opaque est soumis à une irradiation IR sous une forme non diluée.

4. Procédé selon l'une quelconque des revendications précédentes, dans lequel la détermination de la concentration de particules de carbone ou d'asphaltènes déshydrogénés est effectuée avec le processus de conversion en cours d'exécution.

5. Procédé selon l'une quelconque des revendications précédentes, dans lequel l'échantillon est analysé avec un microscope IR.

6. Procédé selon la revendication 5, dans lequel ledit microscope a un polariseur de lumière IR, et comprenant une étape supplémentaire consistant à lire la mésophase carbonée.

7. Utilisation d'un appareil permettant de déterminer la concentration de particules de carbone ou d'asphaltènes déshydrogénés dans un fluide huileux opaque à des rayonnements lumineux dans la plage visible, comprenant une source de lumière IR focalisable sur l'échantillon à analyser, la lumière IR pouvant passer à travers un échantillon d'une épaisseur de 0,05 à 3 mm, un moyen destiné au comptage desdites particules sur plusieurs plans focaux, un moyen permettant de recevoir le rayonnement sortant de l'échantillon, un moyen permettant de transformer le rayonnement sortant en un signal corrélé à la concentration de particules présentes dans l'échantillon, une chambre de lecture et une chambre thermostatique en amont de la chambre de lecture.

8. Utilisation selon la revendication 7, dans laquelle l'appareil comprend les éléments suivants : un échantillonneur automatique, une unité de retraitement de signal ou, selon une autre possibilité, une unité de retraitement et de transfert de signal.

9. Utilisation selon les revendications 7 ou 8 dans laquelle ladite chambre de lecture comprend un microscope optique IR.

10. Utilisation selon la revendication 9, dans laquelle ledit microscope optique IR comprend un polariseur de lumière IR.

11. Utilisation selon la revendication 10, dans laquelle ledit microscope peut effectuer des lectures sur différents plans focaux en chevauchement, moyennant quoi une lecture tridimensionnelle est obtenue.

12. Utilisation selon l'une quelconque des revendications 7 à 11, dans laquelle l'unité de retraitement de signal est une chambre accouplée à un moniteur permettant de représenter l'image de l'échantillon analysé.

13. Utilisation selon l'une quelconque des revendications 7 à 12, et facultativement un moyen permettant de retirer l'échantillon de la chambre de lecture.

14. Utilisation selon l'une quelconque des revendications 7 à 14, intégrée dans l'installation de conversion thermique par l'intermédiaire d'une dérivation à partir de la ligne d'installation.

15. Procédé d'ajustement des conditions de fonctionnement d'une installation de conversion thermique et/ou catalytique de matières pétrolifères, comprenant les étapes suivantes :
la détermination de la concentration de particules de carbone ou d'asphaltènes déshydrogénés présentes dans le résidu de fond de l'installation en soumettant à une irradiation de lumière infrarouge (IR) un échantillon du résidu sous la forme d'une couche d'une épaisseur de 0,05 à 3 mm, dans lequel l'échantillon est placé sur un support transparent au rayonnement infrarouge,
la conversion du rayonnement sortant de l'échantillon irradié en un paramètre CV/IR, un paramètre CV/IR, dans lequel ledit paramètre correspond au nombre de particules ponctuelles sombres présentes dans un résidu de fond (goudron) (CV), visualisées et comptées au moyen d'une analyse de l'échantillon à l'aide d'un rayonnement dans la plage infrarouge (IR), dans lequel ledit paramètre CV/IR est exprimé en tant que nombre de particules par rapport au volume de résidu (n/v ou n/ml), en tant que nombre de particules par rapport au poids (n/poids ou n/g), en tant que pourcentage d'aire totale de particules par rapport à l'aire de champ (%), en tant que volume de particules par rapport au poids d'échantillon (volume/poids ou µl/g ou l/kg), en tant que pourcentage de volume de particules par rapport au volume d'échantillon de résidu analysé (%),
**caractérisé en ce que** les conditions de fonctionnement de l'installation sont corrigées conformément à la valeur CV/IR déterminée.

16. Procédé selon la revendication 15, **caractérisé en ce que** lorsque le paramètre CV/IR détecte une charge carbonée supérieure à un seuil limite prédéfini, on procédera soit à une diminution de la température de four, soit à une augmentation de la quantité d'additifs de stabilisation dans la charge d'installation, afin d'obtenir une diminution du potentiel d'encrassement de l'installation.

17. Procédé selon la revendication 16, **caractérisé en ce que** lorsque le paramètre CV/IR détecte une charge carbonée inférieure à un seuil acceptable maximal, on procédera à une augmentation de la température de four, avec l'augmentation résultante de fractions distillées légères.

18. Procédé selon l'une quelconque des revendications 16 à 17, dans lequel le signal corrélé à la concentration des particules de carbone ou d'asphaltènes déshydrogénés dans l'échantillon déclenche automatiquement une série d'opérations corrigeant les conditions de fonctionnement de l'installation.

19. Procédé selon l'une quelconque des revendications 16 à 18, dans lequel l'échantillon de résidu analysé est sous forme non diluée.

20. Procédé selon l'une quelconque des revendications 16 à 19, dans lequel la détermination de la concentration de particules de carbone ou d'asphaltènes déshydrogénés dans l'échantillon de résidu et la correction des conditions sont effectuées avec l'installation pendant le fonctionnement et en temps réel.
